# DEMANDE DE BREVET EUROPEEN

(11) **EP 3 076 125 A1**
(43) Date de publication de la demande: **05.10.2016**
(21) Numéro de dépôt: 16305366.3
(22) Date de dépôt: 30.03.2016
(51) Int. Cl.: G01B 11/245, G01B 11/25

(54) **INSTALLATION ET PROCÉDÉ D'ACQUISITION AUTOMATIQUE ET DE RESTITUTION NUMÉRIQUE DE SURFACES TRIDIMENSIONNELLES**

(30) Priorité: 30.03.2015 FR 1552675
(71) Demandeur: Telmat Industrie (Société Anonyme), 68360 Soultz (FR)
(72) Inventeur: KEITER, Pascal, 68740 HIRTZFELDEN (FR); DUDKIEWICZ, Gilbert, 68270 RUELISHEIM (FR); FREY, Frédéric, 68110 ILLZACH (FR)
(74) Mandataire: Nuss, Laurent

(57) **Abrégé**

Installation d'acquisition automatique, de traitement et de restitution numérique de plusieurs surfaces tridimensionnelles définissant par assemblage une enveloppe surfacique d'un corps physique ou une scène,
ladite installation comprenant une structure support sur laquelle sont montées une pluralité de capteurs (1) et de repères visuels, chaque capteur (1) incorporant un projecteur apte à projeter un motif de points et fournissant, dans son référentiel spatial propre, les coordonnées spatiales de points faisant partie d'une surface tridimensionnelle visible dans son champ d'acquisition,
ladite installation comprenant en outre au moins une unité de traitement, gérant le fonctionnement de l'installation,
installation caractérisée en ce qu'elle comprend des moyens de commande et de contrôle de la projection du motif de points au niveau de chacun des capteurs (1) de telle manière que les projections issues des différents capteurs (1) soient coordonnées entre elles par l'unité de traitement pour éviter les interférences ou chevauchement entre motifs projetés simultanément par les différents capteurs (1).

## Description

La présente invention concerne le domaine de l'optimisation des capteurs optiques, notamment dans le contexte de l'acquisition de représentations tridimensionnelles d'objets ou de scènes situé(e)s dans un espace d'acquisition, en particulier dans un contexte d'application à l'acquisition d'enveloppes superficielles de tout ou partie du corps de sujets humains, par exemple dans un but de mensuration, de modélisation et/ou de classification, en particulier en relation avec l'industrie et le commerce de l'habillement.

Plus précisément, l'invention concerne une installation d'acquisition automatique, de traitement et de restitution numérique de surfaces tridimensionnelles et un procédé mettant en oeuvre cette installation et intégrant notamment un procédé d'étalonnage et de calibration d'un capteur.

De nombreux procédés et systèmes aptes à réaliser l'acquisition de surfaces tridimensionnelles et la reconstruction postérieure d'une surface unique et d'un seul tenant sont déjà connus dans l'état de la technique, mettant en oeuvre des moyens différents et/ou des méthodes spécifiques, mais présentant tous des inconvénients ou au moins des limitations notables.

Ainsi, on connaît, par exemple par les documents EP-A-1 207 367, FR-A-2 963 673, US 2009/0312866 et WO 2009/153446, des systèmes dans lesquels des motifs de lumière structurés sont projetés dans l'espace d'acquisition et l'image tridimensionnelle est reconstruite à partir d'au moins deux prises de vue. En plus de nécessiter des moyens de projection spécifiques, le cas échéant du type laser, ce type de système est plus ou moins sensible à la lumière ambiante et la précision de la reconstruction de l'image tridimensionnelle peut, du fait de la complexité de la fusion de surfaces à réaliser, ne pas être suffisante lorsque des mesures fines sont à effectuer.

Pour éviter l'opération complexe de fusionnement des images de différents capteurs, il peut être prévu de n'utiliser qu'un seul capteur, en prévoyant le déplacement contrôlé de ce dernier et/ou du sujet. Néanmoins, cette solution ne fournit généralement pas d'image finale de bonne qualité (résolution insuffisante) et en outre l'acquisition totale prend un temps trop long (possible mouvement du sujet pendant l'acquisition).

Par ailleurs, de nouveaux capteurs, dits capteurs 3D de profondeur, sont récemment apparus sur le marché grand public (donc à des coûts faibles), par exemple ceux du type connu sous la désignation Carmine® par la société Primesense ou sous la désignation Xtion pro Live® de la société ASUS, ou encore ceux mis en oeuvre dans la console de jeux vidéo Kinect® de Microsoft®.

Ces capteurs se présentent chacun sous la forme d'une combinaison de plusieurs dispositifs, l'un qui projette un motif ou mouchetis de points dans le spectre non visible (infrarouge), un autre qui fournit pour chaque pixel acquis également une information de profondeur, et un troisième qui fournit la texture (couleur) du pixel. Les informations collectées en sortie du capteur consistent ainsi en des coordonnées 3D (x, y, z), indiquées par rapport à un référentiel spatial centré sur le centre optique du capteur.

Ce type de capteur délivre les informations 3D à une cadence jusqu'à 60 images/seconde, présente un encombrement réduit et peut être directement raccordé à une unité informatique (par exemple au niveau d'un port USB).

Toutefois, le champ d'acquisition, et notamment la partie de ce champ qui fournit une précision d'acquisition suffisante pour les applications mentionnées en introduction, est limité, tant du point de vue de la profondeur (de 0,35 à 5,0 m environ selon le modèle) que du point de vue de l'ouverture angulaire (54° en horizontal et 45° en vertical).

Il a déjà été proposé de mettre en oeuvre ce type de capteur dans le domaine de l'acquisition tridimensionnelle et dans des systèmes de prise de vue.

Dans un premier type de réalisation connu ("KINECT AVATAR: FULLY AUTOMATIC BODY CAPTURE USING A SINGLE KINECT", Didier Striker et al., DFKI, Kaiserslautern), un seul capteur était utilisé, avec donc les inconvénients précités.

Dans une seconde réalisation connue, plusieurs capteurs étaient montés sur une structure support en définissant un espace d'acquisition, chaque capteur fournissant une image de bonne résolution d'une surface limitée donnée. Toutefois, ce système nécessite la mise en place d'un objet d'étalonnage pour l'opérateur pour calibrer le système (pas de fonctionnement entièrement automatique) et l'assemblage des différentes portions de surface est réalisé par recalage de leurs bords périphériques, nécessitant des traitements complexes et un repositionnement, difficile à réaliser en temps réel, sauf à disposer de ressources de calcul très importantes, et donc trop coûteuses pour les applications visées.

Enfin, par la demande de brevet français FR 3 009 749 et la demande de brevet européen EP 2 837 907 au nom du déposant, on connaît un procédé et une installation du type visé en introduction, autorisant une automatisation aisée, rapide et précise de la phase d'étalonnage et de calibration préalable de l'installation.

Néanmoins, les inventeurs ont constaté que la présence d'une pluralité de capteurs avec des champs de projection et d'acquisition au moins partiellement chevauchants génère, lors de l'acquisition des surfaces tridimensionnelles partielles, une interférence entre les motifs projetés conduisant à une perturbation de l'acquisition 3D.

Or, une acquisition simultanée, par le fonctionnement en parallèle de plusieurs capteurs au moins, est nécessaire pour réduire le temps global d'acquisition de la totalité de l'enveloppe ou de la scène, notamment lorsqu'il s'agit de sujets humains. Un séquencement même très rapide d'allumage et d'extinction des projecteurs n'est pas envisageable, l'établissement de la projection après mise sous tension du capteur nécessitant à chaque fois plusieurs secondes.

Par ailleurs, les capteurs utilisés, du type évoqué précédemment, présentant une certaine non linéarité et faisant état de phénomènes de distorsion, leur calibration nécessite obligatoirement la prise en compte d'une pluralité de repères visuels non coplanaires durant la phase préalable d'étalonnage et donc un nombre total important de repères physiques nécessitant une structure support complexe, avec de multiple potences délimitant l'espace d'acquisition.

De plus, des traitements complexes, nécessitant des ressources de calcul importantes, doivent être implémentés pour corriger les défauts optiques des capteurs précités, limitant la vitesse de restitution de l'image de l'enveloppe du corps (objet, sujet) ou de la scène, recomposée par fusion.

Il existe donc également un besoin pour un capteur amélioré, permettant d'améliorer la vitesse de traitement et de restitution, de simplifier davantage la procédure de calibration d'une installation du type précité et la construction même de l'installation, ainsi que pour une installation équipée de tels capteurs.

Le but de l'invention est de fournir une solution permettant de surmonter au moins les principaux inconvénients précités.

A cet effet, l'invention a pour objet une installation d'acquisition automatique, de traitement et de restitution numérique de plusieurs surfaces tridimensionnelles selon le préambule de la revendication 1 et présentant en combinaison les caractéristiques de la partie caractérisante de cette revendication.

L'invention concerne également un procédé d'acquisition automatique, de traitement et de restitution numérique de plusieurs surfaces tridimensionnelles faisant état des caractéristiques de la revendication 8.

L'invention sera mieux comprise grâce à la description ci-après, qui se rapporte à des modes de réalisation préférés, donnés à titre d'exemples non limitatifs, et expliqués avec référence aux dessins schématiques annexés, dans lesquels :
La figure 1A est une vue schématique en élévation latérale d'un banc optique pour la mise en oeuvre du procédé d'étalonnage et de calibration d'un capteur selon l'invention ;
La figure 1B est une vue de dessus d'une surface plane pourvue de sites remarquables sous forme de cercles faisant partie du banc optique de la figure 1 ;

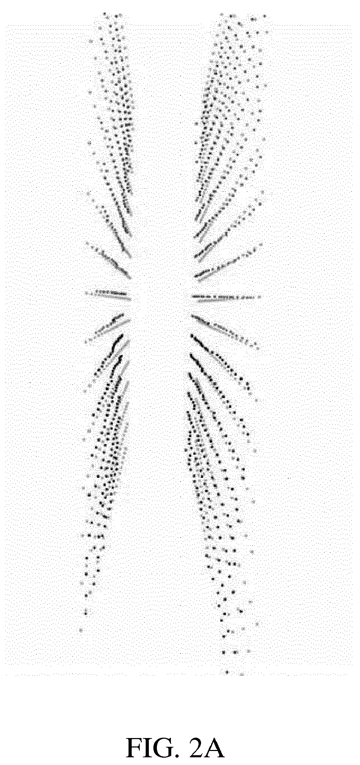

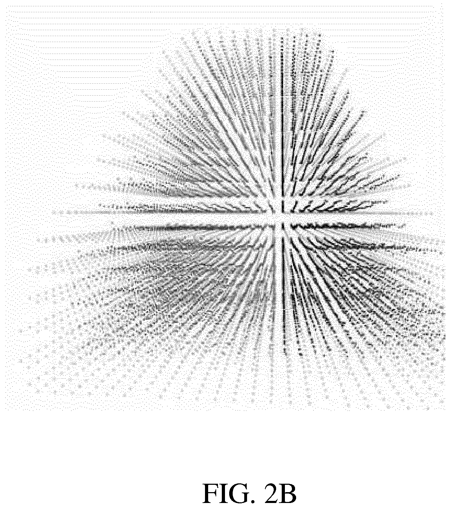

Les figures 2A et 2B sont des représentations 3D des coordonnées de taches circulaires d'une surface plane pourvue d'une multitude de disques de couleur contrastée par rapport au fond relevées à différentes hauteurs/distances par un capteur analysé par le dispositif des figures 1A et 1B, la figure 2A ne montrant que deux alignements et la figure 2B montrant une matrice bidimensionnelle de tels disques (les taches plus foncées correspondant aux coordonnées réelles et les taches plus claires aux coordonnées mesurées par le capteur, et intégrant donc l'erreur du capteur) ;
Les figures 3A et 3B sont des vues en élévation de la face active d'un capteur 3D de profondeur visé par l'invention et intégrant un projecteur de motif de points, la projection étant respectivement active (3A) et inhibée (3B) ;
les figures 4A et 4B sont des vues schématiques partielles en perspective d'une installation selon deux variantes de réalisation de l'invention, seuls les repères visuels et les capteurs étant représentés (figure 4A : 4 montants à repères visuels et 4 rampes de capteurs / figure 4B : 8 montants à repères visuels et 6 rampes de capteurs) ;
les figures 5A et 5B sont des vues de dessus d'un étage de l'espace d'acquisition (défini par quatre montants équipés de repères visuels) et des capteurs (quatre) situés à cet étage de l'installation de la figure 5A, ces deux figures indiquant les capteurs actifs respectivement durant une première séquence d'étalonnage de l'installation (5A) et durant une seconde séquence d'étalonnage de l'installation (5B) ;
la figure 6 est une vue en coupe et de dessus similaire aux figures 5A et 5B d'une variante de réalisation (montants à section triangulaire) d'un étage de l'espace d'acquisition, seul un capteur étant représenté ;
les figures 7A, 7B et 7C sont des représentations schématiques de dessus d'un étage de l'espace d'acquisition et des capteurs selon deux variantes de réalisation de l'installation (à six capteurs par étage), les figures 7B et 7C concernant l'installation de la figure 4B, et
les figures 8A et 8B illustrent des parties d'enveloppes tridimensionnelles obtenues par assemblage de plusieurs (deux ou trois) représentations de surfaces tridimensionnelles avec fusion des zones périphériques chevauchantes.

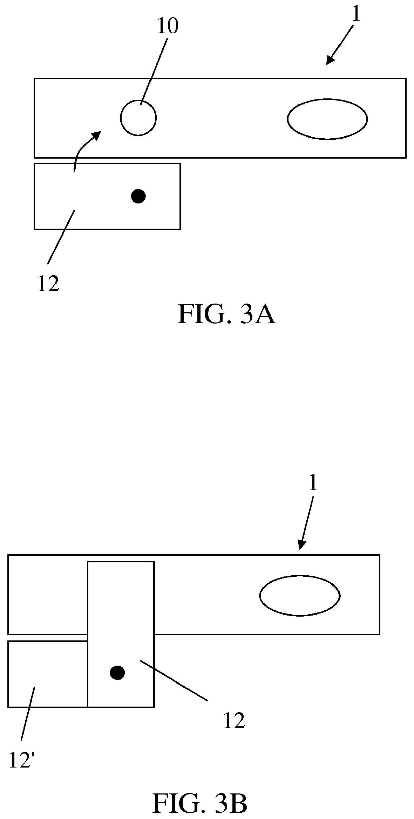

L'invention a pour premier objet, en relation avec les figures 3 à 7, une installation 5 d'acquisition automatique, de traitement et de restitution numérique de plusieurs surfaces tridimensionnelles 2 définissant par assemblage une enveloppe surfacique 6 d'un corps physique ou une scène, en particulier l'enveloppe d'une partie au moins ou de la totalité d'un sujet humain.

Ladite installation 5 comprend une structure support 7 sur laquelle sont montées une pluralité de capteurs 1 et de repères visuels 8, et qui délimite un espace d'acquisition 9, notamment adapté pour accueillir un sujet humain en position debout ou assise, les différents capteurs 1 étant situés en dehors de l'espace d'acquisition 9 et arrangés pour couvrir ensemble la totalité de cet espace, avec un recouvrement partiel périphérique des champs d'acquisition entre capteurs 1 voisins, chaque capteur 1 incorporant un projecteur 10 apte à projeter, dans le champ d'acquisition 1' du capteur 1 considéré, un motif de points dans un spectre non visible, préférentiellement infrarouge, et fournissant, dans son référentiel spatial propre, les coordonnées spatiales xₘ, yₘ, zₘ de points faisant partie d'une surface tridimensionnelle 2 visible dans son champ d'acquisition,

L'intégration physique de projecteurs 10 dans les capteurs 1 permet de faire coïncider constructivement la zone de projection et la zone d'acquisition de chaque capteur, sans nécessiter d'autre réglage.

Ladite installation 5 comprend en outre au moins une unité 11 de traitement, gérant le fonctionnement de l'installation 5, apte à transformer les coordonnées spatiales des points des surfaces 2 acquises par chaque capteur 1 en des coordonnées tridimensionnelles dans un référentiel spatial unique commun, associé à l'installation 5, préférentiellement à l'espace d'acquisition 9, ce par l'intermédiaire de matrices de conversion ou de transformation, avantageusement paramétrées dans une phase de calibration et d'étalonnage de l'installation 5, et aptes à fusionner les représentations des surfaces 2 acquises par les différents capteurs 1, en une unique représentation tridimensionnelle 6 globale par assemblage ordonnée desdites représentations surfaciques partielles 2, avec fusion au niveau de leurs zones périphériques chevauchantes.

Conformément à l'invention, l'installation 5 comprend des moyens 12 de commande et de contrôle de la projection du motif de points au niveau de chacun des capteurs 1 de telle manière que les projections issues des différents capteurs 1 soient coordonnées entre elles par l'unité de traitement 11 pour éviter les interférences ou chevauchement entre motifs projetés simultanément par les différents capteurs 1.

Egalement, conformément à l'invention, l'unité de traitement 11 dispose pour chaque capteur 1 d'une table (stockée dans une mémoire correspondante associée) de correspondance respective, établie préalablement par l'intermédiaire d'un procédé d'étalonnage et de calibration appliqué à chaque capteur 1, tel que décrit plus précisément ci-après, lesdites tables de correspondance étant utilisées par ladite unité de traitement 11 pour calculer les coordonnées spatiales réelles (xᵣ, yᵣ, zᵣ) des points des surfaces 2 dans le repère attaché à chaque capteur 1 à partir des coordonnées spatiales mesurées (xₘ, yₘ, zₘ) par ces derniers.

Ces coordonnées spatiales réelles (xᵣ, yᵣ, zᵣ), établies dans le référentiel propre de chaque capteur 1, sont ensuite converties en des coordonnées tridimensionnelles dans le référentiel spatial commun unique attaché à l'installation, par mise en correspondance de tous les capteurs 1 de l'installation dans ledit référentiel unique. L'origine du référentiel spatial unique peut par exemple correspondre au centre géométrique de l'espace d'acquisition 9.

En prévoyant pour chaque capteur 1 du type 3D évoqué en introduction, une table spécifique de correction de la non-linéarité et de compensation des distorsions, propres à ce capteur, l'invention permet de fournir une installation 5 équipée de capteurs 1 quasi parfaits dans leurs repères propres, présentant des courbes de réponse linéaires et ne nécessitant aucun traitement de mise à l'échelle des nuages de points acquis.

La combinaison des deux dispositions précitées permet, tout en mettant en oeuvre des capteurs 1 disponibles dans le commerce et présentant des performances limitées en termes d'ouverture et de profondeur de champ d'acquisition, ainsi que des limitations dans le domaine optique, d'aboutir à une installation 5 apte à acquérir très rapidement, éventuellement quasiment en temps réel, et avec une grande précision une multitude de points de surface d'un objet, sujet ou scène permettant une restitution sous forme d'images 3D par fusion des contributions des différents capteurs 1.

La structure support 7 (dont seuls les montants 8' et les potences des colonnes 13, 13' sont représentés) fait généralement partie d'une cabine ou analogue (non représentée).

Préférentiellement, les moyens 12 de commande et de contrôle de la projection du motif de points de chaque capteur 1 consistent en des moyens d'inhibition ou d'interruption physique ou optique de la projection, le projecteur 10 intégré à chaque capteur 1 étant activé et émettant en permanence durant la totalité de la phase d'acquisition de l'installation 5.Le projecteur 10 peut donc être activé en permanence, mais la propagation de son émission n'est autorisée que lorsque le capteur 1 correspondant est en mode acquisition.

Selon un mode de réalisation pratique de l'invention, ressortant des figures 3A et 3B, chaque projecteur 10 peut être équipé d'un obturateur 12, par exemple un obturateur optique, tel qu'une lentille polarisable, ou un obturateur mécanique, tel qu'un volet mobile ou un diaphragme, associé à un actionneur 12' commandé par l'unité de traitement 11.

Un pilotage des différents obturateurs 12 par l'unité 11, en accord avec les acquisitions réalisées par les capteurs 1, permet d'optimiser le temps d'acquisition global tout en évitant que plusieurs capteurs 1 n'illuminent la même scène ou surface partielle 2 de l'enveloppe en même temps. Cela n'empêche pas le fonctionnement simultané de plusieurs capteurs 1 pour autant qu'ils n'observent pas une même portion de surface ou de scène en même temps.

Comme illustré sur les figures annexées, l'espace d'acquisition 9 peut consister en un volume parallélépipédique rectangle avec une forme et des dimensions adaptées pour loger un sujet humain en position debout verticale et/ou autre, cet espace 9 étant délimité par des montants 10 portant chacun certains repères visuels 5, par exemple quatre, six ou huit montants verticaux 8' faisant partie de la structure support 7 et arrangés au sol au niveau des angles et côtés d'un carré ou d'un rectangle, les capteurs 1 étant préférentiellement installés en dehors et au-delà desdits montants 8' formant arêtes angulaires pour l'espace d'acquisition 9, en étant par exemple positionnés au moins au niveau des arêtes angulaires d'un parallélépipède de plus grande dimension et entourant le parallélépipède formé par les montants 8', et orientés de telle manière qu'au moins trois montants 8' soient partiellement situés dans le champ d'acquisition 1' de chaque capteur 1, avec une partie au moins de leur hauteur.

En vue d'aboutir à une répartition des capteurs 1 autorisant une acquisition optimale du sujet, de l'objet ou de la scène situé dans l'espace d'acquisition 9, il est avantageusement prévu que les capteurs 1, et préférentiellement également les repères lumineux 8, soient arrangés de manière superposée en plusieurs niveaux ou étages, en étant répartis par colonnes ou rampes 13 s'étendant selon la hauteur de l'espace d'acquisition 9, les capteurs 1 du niveau ou étage supérieur étant avantageusement orientés de manière inclinée vers le bas (notamment pour permettre une bonne acquisition du dessus des épaules dans le cas d'un sujet humain) et les capteurs 1 du niveau ou étage inférieur étant avantageusement orientés de manière inclinée vers le haut.

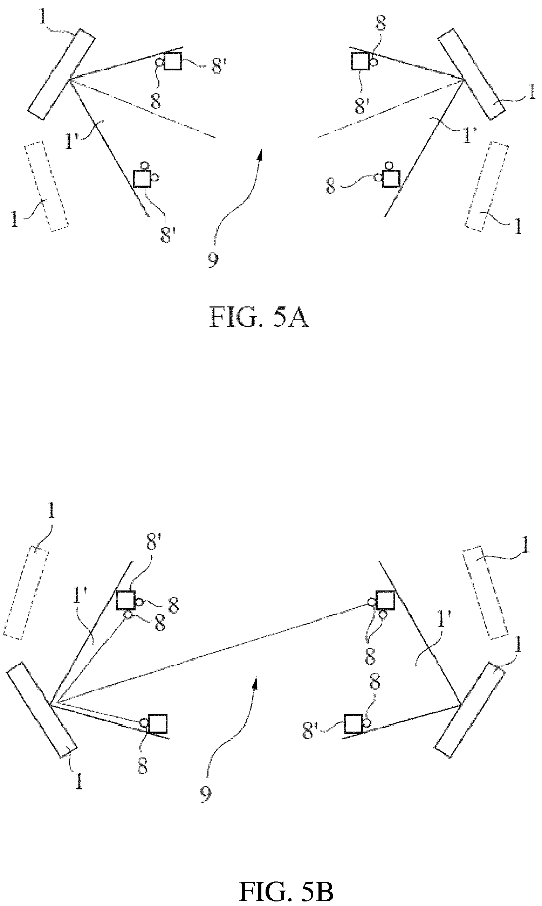

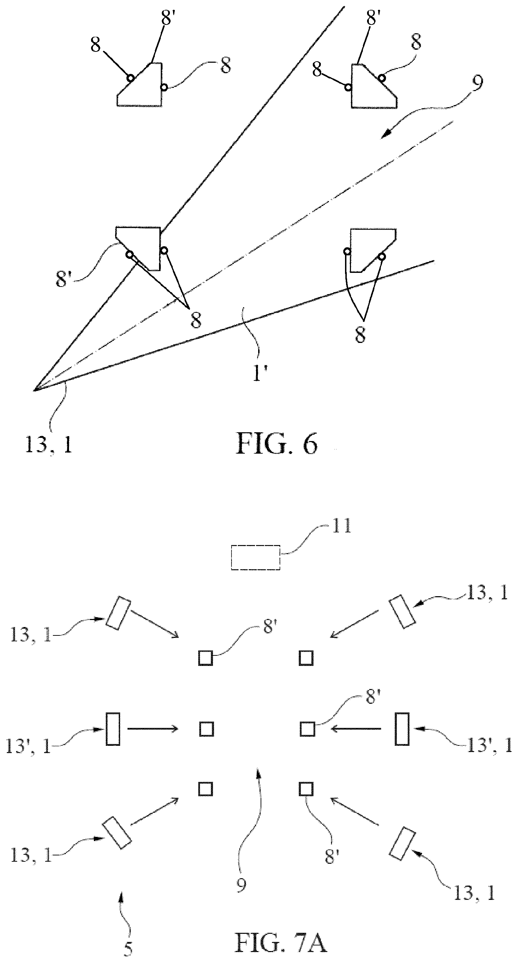

Il peut également être prévu, comme cela ressort notamment des figures 5 et 6 des dessins annexés illustrant deux variantes d'un espace d'acquisition 9 délimité par quatre montants 8', que les capteurs 1, en fonction de la forme et des dimensions de leur champ d'acquisition 1' respectif, soient, d'une part, positionnés et orientés à chaque étage ou niveau de telle manière qu'ils englobent chacun, dans leur champ d'acquisition respectif 1', le montant 8' le plus éloigné d'eux et que leur axe optique (représentés en traits interrompus mixtes sur les figures 5A et 6) passe sensiblement par le milieu de l'un des côtés latéraux de l'espace d'acquisition 9 contigus à l'arête angulaire formée par le montant 8' le plus proche d'eux, et, d'autre part, arrangés, le long de la hauteur de l'espace d'acquisition 9 et à chaque niveau ou étage, de telle manière qu'il existe une superposition partielle périphérique de leur champ d'acquisition 1' avec le champ 1' de chacun des capteurs 1 qui lui sont immédiatement voisins ou adjacents dans la direction verticale.

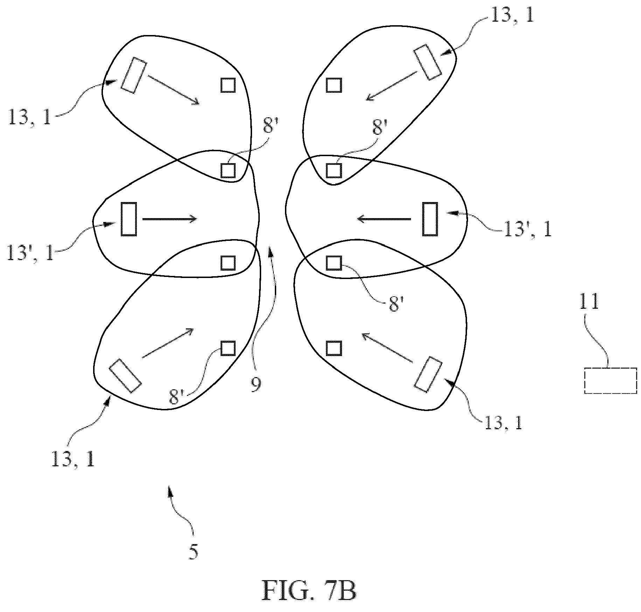

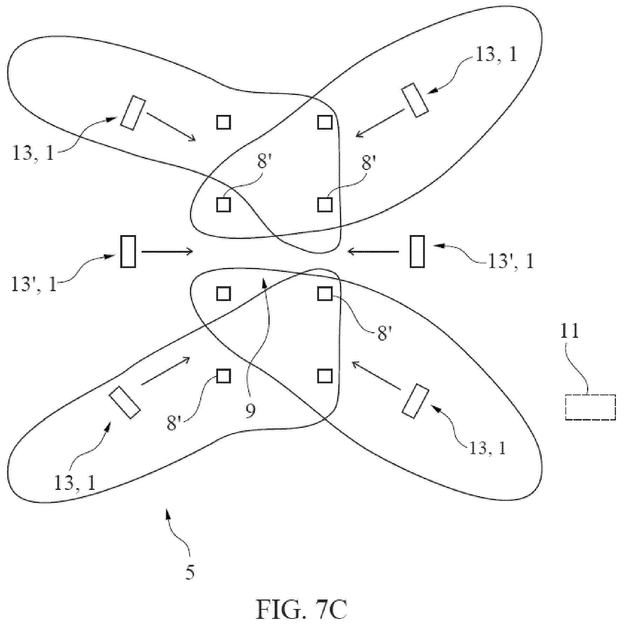

Conformément à une variante de réalisation, et comme le montrent schématiquement les figures 5B et 7, l'installation 5 peut comprendre deux colonnes 13' de capteurs 1 superposés supplémentaires, disposées chacune en face de l'un des deux grands côtés opposés de l'espace d'acquisition 9, lorsque ce dernier a une forme parallélépipédique à section rectangulaire.

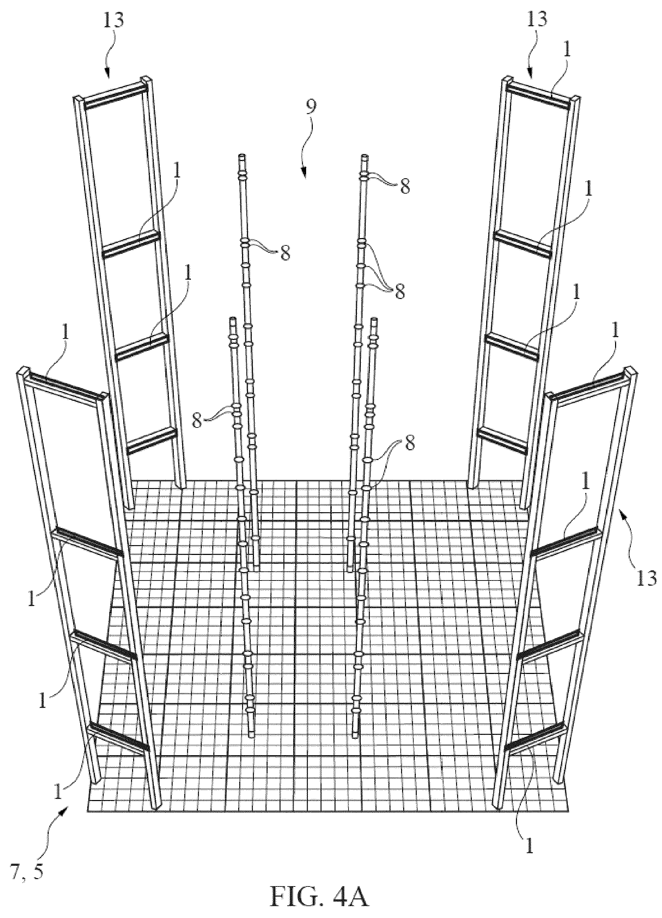

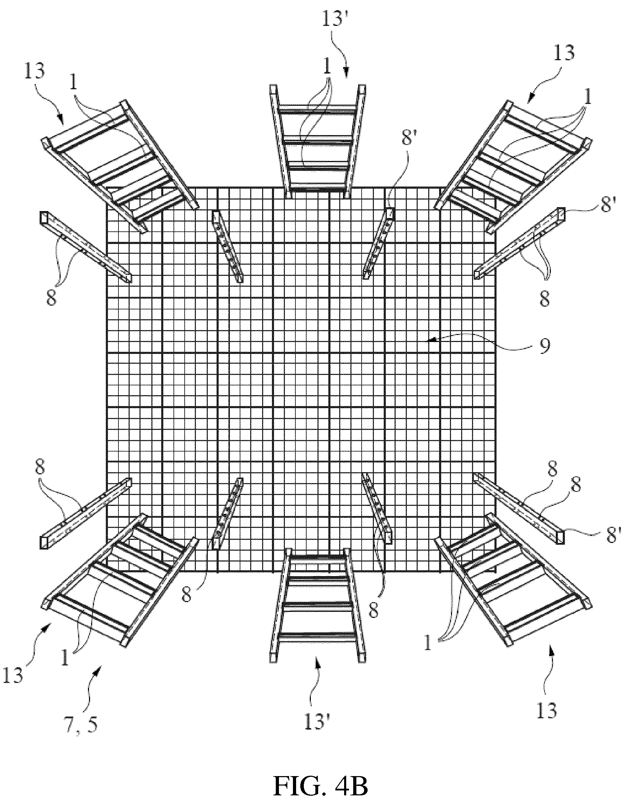

Comme le montrent en outre, par comparaison, les figures 6 et 4, l'installation 5 peut comporter, en fonction de la portée et des formes des champs d'acquisition 1' des capteurs 1, ainsi que de leur arrangement par rapport à l'espace d'acquisition 9, et en tenant compte de la taille et de la forme de ce dernier, quatre, six ou huit montants 8' pourvus de repères 8 répartis sur leur hauteurs (de manière régulière, ou par grappes en fonction de la localisation des capteurs 1). La figure 7C montre les différents triplets, et la figure 7B les différentes paires, de montants 8' dont les repères 8 sont pris en compte par chacune des colonnes 13, 13' de capteurs 1 délimitant l'espace d'acquisition 9.

Les repères visuels actifs 8 peuvent être avantageusement montés dans un boîtier, derrière un cache ou dans l'intérieur (éventuellement creux) des montants 8' et projeter leur rayonnement visible à travers un orifice de faible taille, assimilé sensiblement à un pixel sur les images acquises par les capteurs 1 (émission lumineuse ponctuelle à l'emplacement précis déterminé dans le repère de l'installation).

Les repères 8 sont arrangés sur les différentes faces des montants 8' visibles pour l'un ou plusieurs des capteurs 1.

Selon une autre caractéristique de l'invention, les repères visuels 8, du type commandable ou activable, sont positionnés aux limites de l'espace d'acquisition 9 et se présentent sous la forme de voyants lumineux, tels que par exemple des diodes électroluminescentes pouvant être avantageusement commandés individuellement par l'unité de traitement 11 ou par un moyen spécifique associé à celle-ci, préférentiellement apte à appliquer une séquence d'allumage et d'extinction spécifique et propre à chaque repère 8 et à moduler séparément et indépendamment en intensité chaque repère 8, jusqu'à aboutir à une représentation ponctuelle du repère 8 considéré dans l'image ou la représentation de ce repère 8 acquise par les capteurs 1 dans les champs d'acquisition desquels il est situé.

Les axes d'émission des voyants 5 peuvent avantageusement être orientés perpendiculairement à l'axe optique de l'un au moins des capteurs 1 aptes à les observer dans leurs champs d'acquisition 1' (voyants 5 non visibles pour le capteur 1 considéré).

Selon l'invention, il peut être prévu que la position de chaque capteur 1 dans le référentiel spatial commun unique de l'installation 5 soit stockée dans un mémoire associée à l'unité de traitement 11 et que les capteurs 1 et les repères visuels 8 soient positionnés de telle manière que chaque capteur 1 comporte dans son champ d'acquisition 1' au moins un repère visuel 8 situé dans la région centrale dudit champ 1' et au moins un repère visuel 8 situé dans une zone périphérique dudit champ 1', ce dernier repère 8 périphérique pouvant éventuellement être partagé avec au moins un autre capteur 1 présentant un champ d'acquisition 1' immédiatement voisin et avantageusement au moins partiellement chevauchant en bordure avec le champ d'acquisition 1' du capteur 1 considéré.

En accord avec une première variante de réalisation, ressortant notamment des figures 5A, 5B, 6, 7A et 7B, les capteurs 1 et les repères visuels 8 sont positionnés de telle manière que chaque capteur 1 comporte dans son champ d'acquisition 1' au moins trois, préférentiellement au moins quatre, repères visuels 8 situés dans un plan commun, la position de chaque capteur 1 dans le référentiel spatial commun unique de l'installation 5 étant connue de l'unité de traitement 11.

Sur la figure 7B qui, comme la figure 7A, correspond à une vue de dessus de l'installation 5 dans un plan horizontal donné dans lequel sont situés un capteur 1 de chaque rampe 13, chaque capteur 1 englobe dans son champ d'acquisition 1' deux repères visuels 8, auxquels s'ajoute au moins un repère visuel 8 additionnel situé dans un autre plan horizontal décalé (parallèle au plan de la figure) mais également compris dans le champ d'acquisition 1' (on aboutit donc à au moins trois repères 8 coplanaires pris en compte par chaque capteur 1)

Ainsi, lorsque les positions des capteurs 1 sont connues avec précision dans le référentiel commun de l'installation 5, la présence dans leur champ d'acquisition 1' respectif de seulement deux, voire trois, repères 8 (au moins un repère visuel 8 situé dans la région centrale dudit champ 1' et au moins un repère visuel 8 situé dans une zone périphérique dudit champ 1') peut être suffisante pour réaliser l'étalonnage et la calibration de l'ensemble desdits capteurs 1 de l'installation 5 (cf. également figure 7B).

En effet, la prise en compte d'un nombre aussi limité (deux ou trois) de repères 8, pouvant être issus d'un ensemble de repères 8 tous coplanaires (lorsqu'ils sont au moins trois), est suffisante pour la phase d'étalonnage et de calibration de l'installation 5 du fait de la nature quasi parfaite des capteurs 1 résultant de l'étalonnage d'une table de correspondance propre à chaque capteur 1. Cette disposition permet également la mise en oeuvre de capteurs 1 avec une profondeur de champ réduite et d'une installation avec un nombre limité de repères visuels 8 (ou d'arrangement de tels repères).

En accord avec une seconde variante de réalisation, ressortant également des figures 5A, 5B, 6, 7A et 7C, il peut être prévu que les capteurs 1 et les repères visuels 8 soient positionnés de telle manière que chaque capteur 1 comporte dans son champ d'acquisition 1' au moins trois, préférentiellement au moins quatre, repères visuels 8 non coplanaires.

Les deux modes de réalisation précités sont possibles et exploitables par la mise en oeuvre de capteurs 1 quasi parfaits selon l'invention.

L'invention a également pour objet un procédé d'acquisition automatique, de traitement et de restitution numérique de plusieurs surfaces tridimensionnelles 2 délimitant par coopération une enveloppe 6 de tout ou partie d'un corps physique ou d'une scène, en particulier l'enveloppe extérieure d'un corps humain, en utilisant une installation 5 selon l'invention, avec notamment une pluralité de capteurs 1 et de repères visuels 8 délimitant un espace d'acquisition et une unité de traitement, gérant le fonctionnement de l'installation 5.

Le sujet dont l'enveloppe est à relever est positionné dans l'espace d'acquisition 9 de ladite installation 5 et chaque capteur 1 est apte à acquérir les points d'une surface tridimensionnelle 2 du sujet visible dans son champ d'acquisition 1' propre et constituant une fraction de ladite enveloppe, grâce à la projection d'un motif de points par l'intermédiaire d'un projecteur 10 adapté, intégré dans chaque capteur 1 considéré.

Le procédé consiste à transformer les coordonnées spatiales des points des surfaces 2 acquises par chaque capteur 1 en des coordonnées tridimensionnelles dans un référentiel spatial unique commun, associé à l'installation 5, préférentiellement à l'espace d'acquisition 9, ce par l'intermédiaire de matrices de conversion ou de transformation, avantageusement paramétrées dans une phase de calibration et d'étalonnage de l'installation 5, et aptes à fusionner les représentations des surfaces 2 acquises par les différents capteurs 1, en une unique représentation tridimensionnelle 6 globale par assemblage ordonnée desdites représentations surfaciques partielles 2, avec fusion au niveau de leurs zones périphériques chevauchantes.

Conformément à l'invention, ledit procédé consiste plus précisément à acquérir, simultanément ou de manière au moins partiellement chevauchante dans le temps, les points d'au moins deux surfaces tridimensionnelles 2 partielles soumises à des projections de motifs de points non mutuellement chevauchants ou interférents spatialement, et à répéter l'étape précédente avec d'autres surfaces partielles 2 jusqu'à ce que la totalité de la surface de l'enveloppe ou de la scène ait été balayée et acquise.

Préférentiellement, les projecteurs 10 de motifs de points de l'ensemble des capteurs 1 émettent en permanence et de manière continue, la propagation de leurs émissions étant bloquée, en dehors des phases d'acquisition du capteur 1 considéré, par un obturateur 12, optique ou mécanique, commandé par l'unité de traitement et de gestion 11.

En vue de surmonter la non linéarité des capteurs 1, ainsi que les phénomènes de distorsion optiques susceptibles de les affecter, l'invention peut également consister à réaliser une correction des coordonnées spatiales xₘ, yₘ, zₘ des points projetés fournies par chaque capteur 1 en mettant en oeuvre une table de correspondance propre à ce capteur 1 et établie préalablement par l'intermédiaire d'un procédé d'étalonnage et de calibration puis à convertir les coordonnées spatiales corrigées xᵣ, yᵣ, zᵣ desdits points au moyen de matrices de transformation adaptées et, enfin, à constituer la représentation tridimensionnelle complète 6 de l'enveloppe par assemblage ordonné des différentes représentations numériques partielles 2 fournies par les différents capteurs 1 avec fusion desdites surfaces 2 au niveau de leurs zones périphériques mutuellement superposées ou chevauchantes.

Conformément à une caractéristiques de l'invention, ledit procédé préalable d'étalonnage et de la calibration peut consister à constituer une table de correspondance entre, d'une part, les coordonnées réelles et connues d'une pluralité de sites et/ou de points remarquables 3 situés dans le champ d'acquisition dudit capteur 1 et, d'autre part, les coordonnées mesurées pour ces sites et/ou points 3 et fournies par ledit capteur 1, ce en disposant ce dernier successivement à différentes distances desdits sites ou points 3.

En accord avec une variante préférée, les sites ou points remarquables 3 sont tous situés dans un même plan et, pour l'établissement de la table de correspondance, le capteur 1 est déplacé, de manière discrète, en translation selon une direction DP perpendiculaire audit plan.

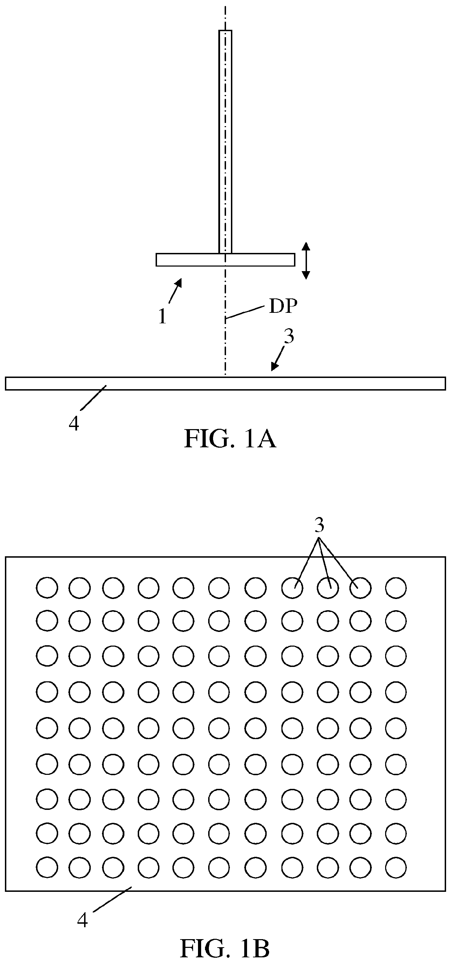

Selon un mode de réalisation pratique ressortant des figures 1A et 1B, le procédé d'étalonnage et de calibration consiste à fournir un banc optique comprenant une surface plane 4 présentant un ensemble de formes géométriques 3, ressortant préférentiellement de manière fortement contrastée par rapport à un fond uniforme et dont les coordonnées exactes de points particuliers sont connues, tel que par exemple un arrangement bidimensionnel en lignes et rangées d'une pluralité de cercles ou de disques avec des centres connus, à positionner le capteur 1 au-dessus de la surface plane 4 de manière centrale pour lui permettre d'observer l'ensemble des formes géométriques 3 dans son champ d'acquisition, et à déplacer le capteur 1, préférentiellement par paliers, selon une direction DP perpendiculaire au plan de la surface 4 en réalisant l'acquisition de prises de vues à différentes distances, chaque prise de vue par le capteur 1 à une distance donnée fournissant des coordonnées mesurées de points particuliers des formes géométriques 3, intégrant le défaut de linéarité et la distorsion affectant ledit capteur 1.

Les coordonnées du centre et les dimensions de chaque cercle (ou taches circulaires contrastées en forme de disques) étant connues, il est possible d'établir (en faisant varier la distance au plan) une table de correspondance précise entre les coordonnées réelles (connues) de chaque cercle et les coordonnées brutes fournies par le capteur 1 pour ce cercle. Les coordonnées d'un point situé en dehors des cercles sont déterminées par interpolation linéaire.

Le procédé selon l'invention permet d'obtenir, grâce à la table de correspondance et de compensation établie expérimentalement, pour chaque capteur 1, un capteur quasi parfait dans son propre repère.

L'installation 5 peut également de manière avantageuse mettre en oeuvre les autres phases du procédé d'acquisition automatique déjà décrites dans la demande de brevet français FR 3 009 749 et dans la demande de brevet européen EP 2 837 907 de la demanderesse, en particulier les autres opérations de la phase d'étalonnage et de calibration évoquée dans ces demandes.

A l'issue de cet étalonnage global, le procédé mis en oeuvre permet d'acquérir en temps réel, avec une pluralité de capteurs 1 et avec une très bonne résolution, une pluralité de surfaces tridimensionnelles 2, dont les représentations numériques peuvent, du fait de l'expression des coordonnées de l'ensemble des points dans un même référentiel spatial, être fusionnées naturellement pour constituer la représentation globale 6 de l'enveloppe du sujet.

L'assemblage avec fusion périphérique des représentations des surfaces tridimensionnelles 2 ne nécessite aucun recalage mathématique, donc aucune manipulation de données susceptible de générer des erreurs.

Les différentes matrices de conversion et de transformation linéaire déterminées lors de la phase préalable de calibration, peuvent notamment être calculées par une méthode des moindres carrés, ce afin de minimiser globalement les erreurs. au niveau des différents facteurs de conversion.

Le procédé selon l'invention, du fait notamment des capteurs 3D de profondeur 1 utilisés (par exemple du type de ceux indiqués précédemment), ne nécessite aucune projection de lumière supplémentaire et n'est pas sensible à la lumière ambiante (les capteurs 1 projetant un motif de points infrarouge répartis dans leur champ d'acquisition 1' respectif).

Dans une configuration idéale, il serait souhaitable de disposer d'une matrice de repères 8 répartis de matière homogène sur l'ensemble de la scène observée par chaque capteur 1, ce qui permettrait de corriger de manière optimale les éventuelles aberrations géométriques desdits capteurs 1.

Toutefois, une telle construction optimale est difficile à réaliser dans la pratique compte tenu du nombre extrêmement élevé de repères 8 qu'il y aurait lieu de mettre en place et de la complexité structurelle qui en résulterait.

Dans ce contexte, l'établissement d'une table de correspondance pour chaque capteur, telle que prévue par l'invention, permet de s'affranchir pour l'essentiel de cette contrainte et donc de simplifier la construction.

En tout état de cause et à titre de compromis avantageux entre une bonne qualité d'acquisition et un nombre limité de repères 8, il peut être prévu de positionner spatialement les repères visuels 8 par rapport aux différents capteurs 1 de telle manière que, parmi les repères 8 coplanaires ou non vus par chaque capteur 1, au moins un est situé dans la région centrale du champ d'acquisition 1' du capteur 1 concerné et au moins un, préférentiellement plusieurs, dans une zone périphérique dudit champ 1'.

La figure 5B illustre, à titre d'exemple, l'acquisition par un capteur 1 des coordonnées de deux capteurs coplanaires (selon une première variante de réalisation de l'invention), d'un troisième repère situé dans un même plan, par exemple le plan du capteur, et d'un quatrième repère situé dans un plan supérieur ou inférieur (ce repère non coplanaire étant confondu sur la figure 5B avec le repère superposé situé dans le même plan que les deux autres repères).

En vue d'aboutir à une bonne qualité de la fusion des surfaces 2 voisines entre elles et donc à une absence de discontinuité dans l'enveloppe, l'invention prévoit avantageusement des zones de recouvrement ou de chevauchement mutuel représentant au moins 10 % entre champs d'acquisition 1' de capteurs 1 voisins.

En outre, deux capteurs 1 voisins, dont les champs d'acquisition 1' se chevauchent partiellement en périphérie, partagent au moins un repère visuel commun 8 situé dans ladite région de chevauchement mutuel, lesdits repères visuels actifs 8 se présentant préférentiellement chacun sous la forme d'une diode électroluminescente, éventuellement disposée derrière une surface perforée et dont l'axe d'émission est avantageusement disposé perpendiculairement à l'axe optique du ou des capteurs 1 dont le(s) champ(s) d'acquisition 1' l'englobe(nt).

Enfin, le procédé peut prévoir également de réaliser virtuellement au moins une projection planaire des points de la représentation numérique tridimensionnelle globale 6 sur au moins un plan, à en extraire une ou plusieurs ligne(s) de contour et à effectuer des mesures et/ou des localisations de zones ou de points remarquables, sur cette ou ces lignes.

A titre d'exemple de réalisation pratique, le processus d'étalonnage peut comprendre les étapes suivantes :
- acquisition d'une séquence de n images,
- localisation des différents points lumineux (repères 8) dans chaque image prise par chaque capteur 1,
- relevé de la séquence d'allumage et d'extinction correspondant à chaque point lumineux pour l'identifier et récupérer sa position géométrique dans le repère du capteur 1 considéré (coordonnées xᵣ, yᵣ, zᵣ),
- calcul de la matrice de transfert pour convertir les coordonnées indiquées dans le repère des capteurs 1 (après rectification avec la table de correspondance adéquate établie préalablement) dans le repère de l'installation 5.

De même, à titre d'exemple de réalisation pratique du processus d'acquisition, il peut être prévu de réaliser :
- pour chaque capteur : une acquisition d'une séquence de n images et le moyennage de ces images pour filtrer le bruit,
- l'application de la matrice de transfert pour convertir les coordonnées des points des surfaces 2 exprimées dans le repère du capteur 1 concerné (après rectification avec la table de correspondance adéquate établie préalablement) en des coordonnées exprimées dans le repère de l'installation 6.

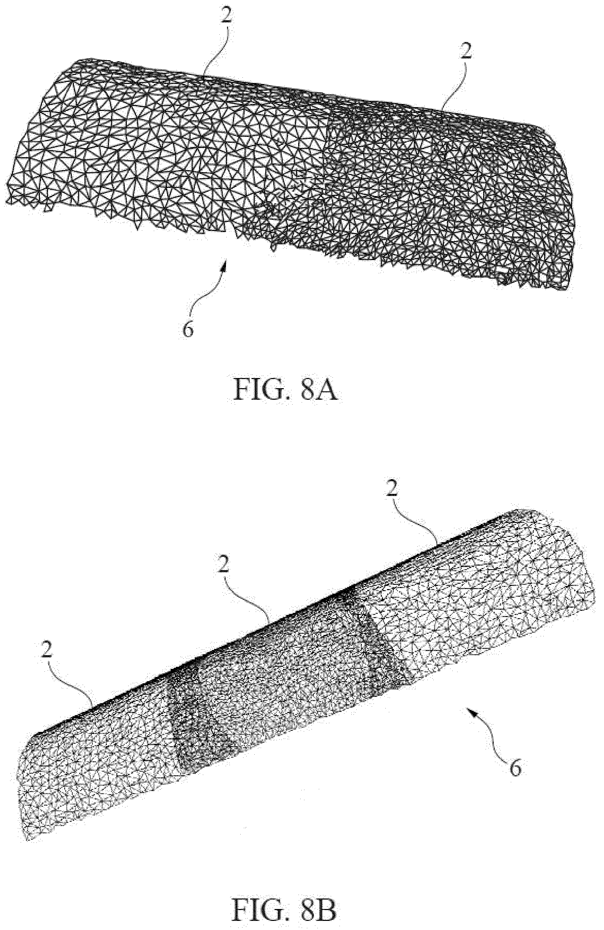

Enfin, le processus de reconstruction surfacique peut, par exemple, consister à rassembler les points des représentations des surfaces fournis par tous les capteurs et dont les coordonnées sont exprimées dans le repère de l'installation et à réaliser la fusion des surfaces 2 au niveau des zones en chevauchement en une représentation 3D surfacique de l'enveloppe entière (figures 8A et 8B).

Le processus de fusion des surfaces peut, par exemple, être similaire à celui mis en oeuvre dans le système Symcad II commercialisé par la demanderesse.

A titre d'exemple pratique non limitatif, et aux fins d'exploitation, les nuages de points (images des points projetés) provenant des différents capteurs 1 sont collectés et peuvent être injectés dans un dispositif (logiciel) de maillage de points (au niveau de l'unité 11) afin de procéder à une simplification en vue de pouvoir construire un modèle géométrique pour en faire une représentation graphique. Il existe des logiciels de maillage ("mailleurs") comme par exemple "Meshlab" (logiciel de traitement de maillages 3D avec de nombreuses fonctionnalités de manipulation d'images 3D).

Toujours à titre d'exemple et en vue d'obtenir une représentation graphique sur l'écran d'un ordinateur de l'ensemble des données acquises et propre et aussi afin de rendre fluide sa manipulation (rotation, translation, zoom, ...), un certain nombre de traitements connus de l'homme du métier sont appliqués aux surfaces 2 :
- Décimation des points 3D afin d'alléger les nuages de points ;
- Lissage des nuages de points 3D afin d'obtenir un objet plus lisse (élimination d'éventuels points parasites), ce qui donne un meilleur aspect à la surface 6, chaque point 3D étant remplacé par la moyenne avec son voisinage (lissage par la méthode du Laplacien) ;
- Création de l'objet volumique par une reconstruction sous forme de triangle (triangulation de Delaunay, méthode de Poisson, ...), avec fusion naturelle au niveau des zones adjacentes/chevauchantes ;
- Application d'un rendu afin de colorer l'objet ou de lui donner l'aspect réel en appliquant la véritable texture de l'objet acquise par chaque capteur 1 lors de l'acquisition ;
- Export des données dans un format 3D standard (par exemple du type OBJ, wrl, stl, ...).

Pour obtenir un rendu optimal au niveau de la texture de la reconstruction 3D, en particulier un rendu des couleurs de l'objet ou de la scène, des moyens d'éclairage peuvent être installés dans la cabine afin de fournir en toute circonstance un éclairage uniforme sur l'objet dont la surface volumique ou l'enveloppe est à acquérir.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Installation d'acquisition automatique, de traitement et de restitution numérique de plusieurs surfaces tridimensionnelles définissant par assemblage une enveloppe surfacique d'un corps physique ou une scène, en particulier l'enveloppe d'une partie au moins ou de la totalité d'un sujet humain,
ladite installation (5) comprenant une structure support (7) sur laquelle sont montées une pluralité de capteurs (1) et de repères visuels (8), et qui délimite un espace d'acquisition (9), notamment adapté pour accueillir un sujet humain en position debout ou assise, les différents capteurs (1) étant situés en dehors de l'espace d'acquisition (9) et arrangés pour couvrir ensemble la totalité de cet espace, avec un recouvrement partiel périphérique des champs d'acquisition entre capteurs (1) voisins, chaque capteur (1) incorporant un projecteur (10) apte à projeter, dans le champ d'acquisition (1') du capteur 1 considéré, un motif de points dans un spectre non visible, préférentiellement infrarouge, et fournissant, dans son référentiel spatial propre, les coordonnées spatiales (xₘ, yₘ, zₘ) de points faisant partie d'une surface tridimensionnelle (2) visible dans son champ d'acquisition,
ladite installation (5) comprenant en outre au moins une unité (11) de traitement, gérant le fonctionnement de l'installation (5), apte à transformer les coordonnées spatiales des points des surfaces (2) acquises par chaque capteur (1) en des coordonnées tridimensionnelles dans un référentiel spatial unique commun, associé à l'installation (5), préférentiellement à l'espace d'acquisition (9), ce par l'intermédiaire de matrices de conversion ou de transformation, avantageusement paramétrées dans une phase de calibration et d'étalonnage de l'installation (5), et aptes à fusionner les représentations des surfaces (2) acquises par les différents capteurs (1), en une unique représentation tridimensionnelle (6) globale par assemblage ordonnée desdites représentations surfaciques partielles (2), avec fusion au niveau de leurs zones périphériques chevauchantes,
installation (5) **caractérisée**
**en ce qu'**elle comprend des moyens (12) de commande et de contrôle de la projection du motif de points au niveau de chacun des capteurs (1) de telle manière que les projections issues des différents capteurs (1) soient coordonnées entre elles par l'unité de traitement (11) pour éviter les interférences ou chevauchement entre motifs projetés simultanément par les différents capteurs (1), et
**en ce que** l'unité de traitement (11) dispose pour chaque capteur (1) d'une table de correspondance respective, établie préalablement par l'intermédiaire d'un procédé d'étalonnage et de calibration appliqué à chaque capteur (1), lesdites tables de correspondance étant stockées dans une mémoire adaptée et utilisées par ladite unité de traitement (11) pour calculer les coordonnées spatiales réelles (xᵣ, yᵣ, zᵣ) des points des surfaces (2) dans le repère respectif attaché à chaque capteur (1) à partir des coordonnées spatiales mesurées (xₘ, yₘ, zₘ) par ces derniers.

2. Installation selon la revendication 1, **caractérisée en ce que** les moyens (12) de commande et de contrôle de la projection du motif de points de chaque capteur (1) consistent en des moyens d'inhibition ou d'interruption physique ou optique de la projection, le projecteur (10) intégré à chaque capteur (1) étant activé et émettant en permanence durant la totalité de la phase d'acquisition de l'installation (5).

3. Installation selon la revendication 1 ou 2, **caractérisée en ce que** chaque projecteur (10) est équipé, en tant que moyens de commande et de contrôle de la projection du motif de points, d'un obturateur (12), par exemple d'un obturateur optique, tel qu'une lentille polarisable, ou d'un obturateur mécanique, tel qu'un volet mobile ou un diaphragme, associé à un actionneur (12') commandé par l'unité de traitement (11).

4. Installation selon la revendication 3, **caractérisée en ce que** les repères visuels (8), du type commandable ou activable, sont positionnés aux limites de l'espace d'acquisition (9) et se présentent sous la forme de voyants lumineux, tels que par exemple des diodes électroluminescentes pouvant être avantageusement commandés individuellement par l'unité de traitement (11) ou par un moyen spécifique associé à celle-ci, préférentiellement apte à appliquer une séquence d'allumage et d'extinction spécifique et propre à chaque repère (8) et à moduler séparément et indépendamment en intensité chaque repère (8), jusqu'à aboutir à une représentation ponctuelle du repère (8) considéré dans l'image ou la représentation de ce repère (8) acquise par les capteurs (1) dans les champs d'acquisition desquels il est situé.

5. Installation selon l'une quelconque des revendications 1 à 4, **caractérisée en ce que** la position de chaque capteur (1) dans le référentiel spatial commun unique de l'installation (5) est stockée dans un mémoire associée à l'unité de traitement (11) et **en ce que** les capteurs (1) et les repères visuels (8) sont positionnés de telle manière que chaque capteur (1) comporte dans son champ d'acquisition (1') au moins un repère visuel (8) situé dans la région centrale dudit champ (1') et au moins un repère visuel (8) situé dans une zone périphérique dudit champ (1'), ce dernier repère (8) périphérique pouvant éventuellement être partagé avec au moins un autre capteur (1) présentant un champ d'acquisition (1') immédiatement voisin et avantageusement au moins partiellement chevauchant en bordure avec le champ d'acquisition (1') du capteur (1) considéré.

6. Installation selon la revendication 5, **caractérisée en ce que** les capteurs (1) et les repères visuels (8) sont positionnés de telle manière que chaque capteur (1) comporte dans son champ d'acquisition (1') au moins trois, préférentiellement au moins quatre repères visuels (8) situés dans un plan commun, la position de chaque capteur (1) dans le référentiel spatial commun unique de l'installation (5) étant connue de l'unité de traitement (11).

7. Installation selon l'une quelconque des revendications 1 à 4, **caractérisée en ce que** les capteurs (1) et les repères visuels (8) sont positionnés de telle manière que chaque capteur (1) comporte dans son champ d'acquisition (1') au moins trois, préférentiellement au moins quatre repères visuels (8) non coplanaires.

8. Procédé d'acquisition automatique, de traitement et de restitution numérique de plusieurs surfaces tridimensionnelles délimitant par coopération une enveloppe de tout ou partie d'un corps physique ou d'une scène, en particulier l'enveloppe extérieure d'un corps humain, en utilisant une installation (5) selon l'une quelconque des revendications 1 à 7 avec notamment une pluralité de capteurs (1) et de repères visuels (8) délimitant un espace d'acquisition et une unité de traitement, gérant le fonctionnement de l'installation (5),
le sujet dont l'enveloppe est à relever étant positionné dans l'espace d'acquisition (9) de ladite installation (5) et chaque capteur (1) étant apte à acquérir les points d'une surface tridimensionnelle (2) du sujet visible dans son champ d'acquisition (1') propre et constituant une fraction de ladite enveloppe, grâce à la projection d'un motif de points par l'intermédiaire d'un projecteur (10) adapté, intégré dans chaque capteur (1) considéré,
le procédé consistant à transformer les coordonnées spatiales des points des surfaces (2) acquises par chaque capteur (1) en des coordonnées tridimensionnelles dans un référentiel spatial unique commun, associé à l'installation (5), préférentiellement à l'espace d'acquisition (9), ce par l'intermédiaire de matrices de conversion ou de transformation, avantageusement paramétrées dans une phase de calibration et d'étalonnage de l'installation (5), et aptes à fusionner les représentations des surfaces (2) acquises par les différents capteurs (1), en une unique représentation tridimensionnelle (6) globale par assemblage ordonnée desdites représentations surfaciques partielles (2), avec fusion au niveau de leurs zones périphériques chevauchantes,
procédé **caractérisé**
**en ce qu'**il consiste à acquérir, simultanément ou de manière au moins partiellement chevauchante dans le temps, les points d'au moins deux surfaces tridimensionnelles (2) partielles soumises à des projections de motifs de points non mutuellement chevauchants ou interférents spatialement, et à répéter l'étape précédente avec d'autres surfaces partielles (2) jusqu'à ce que la totalité de la surface de l'enveloppe ou de la scène ait été balayée et acquise, et
**en ce qu'**il consiste également à réaliser une correction des coordonnées spatiales (xₘ, yₘ, zₘ) des points projetés fournies par chaque capteur (1) en mettant en oeuvre une table de correspondance propre à ce capteur (1) et établie préalablement par l'intermédiaire d'un procédé d'étalonnage et de calibration, puis à convertir les coordonnées spatiales corrigées (xᵣ, yᵣ, zᵣ) desdits points au moyen de matrices de transformation adaptées et, enfin, à constituer la représentation tridimensionnelle complète (6) de l'enveloppe par assemblage ordonné des différentes représentations numériques partielles (2) fournies par les différents capteurs (1) avec fusion desdites surfaces (2) au niveau de leurs zones périphériques mutuellement superposées ou chevauchantes.

9. Procédé selon la revendication 8, **caractérisé en ce que** les projecteurs (10) de motifs de points de l'ensemble des capteurs (1) émettent en permanence et de manière continue, la propagation de leurs émissions étant bloquée, en dehors des phases d'acquisition du capteur (1) considéré, par un obturateur (12), optique ou mécanique, commandé par l'unité de traitement et de gestion (11).

10. Procédé selon l'une quelconque des revendications 8 et 9, **caractérisé en ce que** le procédé d'étalonnage et de calibration consiste à constituer une table de correspondance entre, d'une part, les coordonnées réelles et connues d'une pluralité de sites et/ou de points remarquables (3) situés dans le champ d'acquisition dudit capteur (1) et, d'autre part, les coordonnées mesurées pour ces sites et/ou points (3) et fournies par ledit capteur (1), ce en disposant ce dernier successivement à différentes distances desdits sites ou points (3).

11. Procédé selon la revendication 10, **caractérisé en ce que** les sites ou points remarquables (3) sont tous situés dans un même plan et **en ce que**, pour l'établissement de la table de correspondance, le capteur (1) est déplacé, de manière discrète, en translation selon une direction (DP) perpendiculaire audit plan.

12. Procédé selon la revendication 11, **caractérisé en ce qu'**il consiste à fournir un banc optique comprenant une surface plane (4) présentant un ensemble de formes géométriques (3), ressortant préférentiellement de manière fortement contrastée par rapport à un fond uniforme et dont les coordonnées exactes de points particuliers sont connues, tel que par exemple un arrangement bidimensionnel en lignes et rangées d'une pluralité de cercles ou de disques avec des centres connus, à positionner le capteur (1) au-dessus de la surface plane (4) de manière centrale pour lui permettre d'observer l'ensemble des formes géométriques (3) dans son champ d'acquisition, et à déplacer le capteur (1), préférentiellement par paliers, selon une direction (DP) perpendiculaire au plan de la surface (4) en réalisant l'acquisition de prises de vues à différentes distances, chaque prise de vue par le capteur (1) à une distance donnée fournissant des coordonnées mesurées de points particuliers des formes géométriques (3), intégrant le défaut de linéarité et la distorsion affectant ledit capteur (1).
